# EUROPEAN PATENT SPECIFICATION

(11) **EP 0 385 286 B1**
(45) Date of publication and mention of the grant of the patent: **07.09.1994**
(21) Application number: 90103495.9
(22) Date of filing: 23.02.1990
(51) Int. Cl.: F16H 61/06, F16K 31/06

(54) **Variable force solenoid pressure regulator for electronic transmission controller**
Mittels eines eine veränderliche Kraft erzeugenden Elektromagneten arbeitender Druckregler für die elektronische Steuerung eines Getriebes
Régulateur de pression ayant un solénoide à force variable pour la commande électronique d'une transmission

(30) Priority: 28.02.1989 US 316998
(43) Date of publication of application: 05.09.1990
(73) Proprietor: Lectron Products, Inc., Rochester Hills, Michigan 48308 (US); FORD MOTOR COMPANY, Dearborn, MI 48121 (US)
(72) Inventor: Miller, Ellsworth Stephen, Rochester Hills, Michigan 48063 (US); Slavin, Michael (NMI), Caseville, Michigan 487725 (US); Ling, Ching Chung, Plymouth, Michigan 48170 (US)
(74) Representative: Witte, Alexander, Dr.-Ing.

(56) References cited:
- DE-A- 3 402 119
- FR-A- 2 140 925
- GB-A- 2 221 349
- US-A- 4 744 389
- US-A- 4 836 057

## Description

This invention relates to solenoid operated fluid control devices, and more particularly to a variable force solenoid valve assembly adapted for use in a automatic transmission controller for controllably reducing a fluid inlet pressure to a outlet control pressure.

In the past, automatic transmissions used in motor vehicles were typically controlled through fluidic control systems incorporate numerous piston and cylinder assemblies. Although such devices operate satisfactorily, they have several drawbacks including high cost attributable to the high precision necessary in machining the components and the necessity of providing and assembling numerous components. Further, such systems are restricted in their operational capabilities. Modern motor vehicles are incorporating increasing numbers of electronically controlled sub-systems and particular attention is presently being directed toward designing electronically controlled automatic transmission controllers. This invention relates specifically to an improved variable force solenoid valve assembly which can be employed in such a controller device.

Variable force solenoid valve assemblies are used in electronic transmission controllers to provide control over fluid pressures which are to be provided in response to an electrical input signal applied to the solenoid. In particular, variable force solenoid valve assemblies are employed to provide regulation of the "shift-feel" of a automatic transmission. "Shift-feel" is the sudden and harsh impact felt by the vehicle operator due to engagement and disengagement of the transmission gearing upon energization of ON/OFF solenoid valves, typically provided in such electronic controllers. Such sudden and harsh shift-feel is extremely undesirable. Variable force solenoid valve assemblies permit the calibration and fine adjustment of shift-feel to provide a smoother transition during transmission gear changes.

A number of significant design challenges are presented in designing a variable force solenoid valve assembly for controllably regulating the fluid pressure delivered to an outlet port of a transmission controller relative to the inlet line pressure. Controlled energization of the solenoid enables the control pressure to be effectively modulated. However, precise regulation of the control pressure necessitates a highly stable fluid flow condition which is directly influenced by the design of the flow control valving components and the fluid communication therethrough. Stable flow conditions tend to minimize undesirable self-excited oscillation of the valving components thereby promoting hydraulic equilibrium conditions.

Typically, variable force solenoid devices are provided with fluid control components consisting of a spool valve having a stem and two radially extending lobes or lands. The spool valve is movably confined within a valve body to create flow restrictions for pressure regulation. Fluid passages are provided in the valve body which communicate with the various surfaces of the spool valve. Commonly, fluid at inlet pressure is delivered to a flow restriction provided between the two spool valve lands. The flow restriction enables the fluid pressure to be reduced to a desired outlet control pressure. However, the fluid forces acting on the two lands of the spool valve generate a negative hydraulic damping characteristic. Negative damping produces self-excited vibration or oscillation of the spool valve during fluid flow conditions. Such self-excited oscillation inhibits accurate regulation of the control pressure. Additionally, the self-excited oscillation of the spool valve makes the variable force solenoid valve unstable and difficult to calibrate.

A variable force solenoid valve assembly of the type mentioned above is disclosed by US-A-4,744,389. The known valve assembly for controllably reducing a fluid inlet pressure to an outlet control pressure in response to an electrical input signal comprises a valve body having a longitudinal bore and defining an inlet port for connection to a hydraulic pump, an outlet port for connection to a hydraulically operated device, a discharge port for connection to a hydraulic fluid reservoir and a cylindrical end portion surrounding a portion of the longitudinal bore, with the ports opening transversely into the longitudinal bore. Also included is a spool valve axially movable in the longitudinal bore between positions that provide flow passages between the inlet, outlet and discharge ports. An electromagnet having a solenoid winding, a fixed magnetic core, and a cylindrical plunger movable within the winding and axially aligned and engageable end-to-end with the spool valve are provided. The spool valve comprises two lands enclosing a first chamber therebetween which acts as a flow restriction to reduce the pressure at inlet port to the pressure at outlet port. The pressure at outlet port is further coupled back by an external line to a second chamber comprised at the end of the longitudinal bore. In addition the valve body comprises a third chamber formed by a circumferential groove within the valve body around the spool valve being interconnected by vent passages to a guide tube within which the cylindrical plunger is movably arranged which is prestressed by a spring to prevent the creation of excessive pressure or vacuum in the guide tube above the plunger.

It is an object of the invention to provide an improved variable force solenoid valve assembly for controllably reducing a fluid inlet pressure to an outlet control pressure.

This object is achieved by a variable force solenoid assembly according to claim 1 or 8.

The present invention discloses flow control components associated with a solenoid valve assembly comprising a three land spool valve confined within a valve body, the combination of which generates posivitve fluid damping characteristics. This positive fluid damping has the effect of attenuating the amplitude of the natural oscillation or vibration of the spool valve generated by the flow of fluid. Such a design provides extremely stable control over spool valve oscillation which permits improved regulation of the outlet control pressure and accurate and repeatable initial calibration of the valve components.

Another advantage of the variable force solenoid device according to this invention is its ability to be easily calibrated for the desired vehicular application.

Yet another advantage of this invention is its ease of assembly due to the use of pre-calibrated sub-assemblies.

The present invention permits efficient packaging through the use of variable force output solenoids. Excellent fluid flow characteristics are provided by designing the valve elements of the valve body assembly such that they provide passages and orifices designed to reduce the tendency for generation of high frequency oscillation and eddies during fluid flow through the valve.

Additional benefits and advantages of the present invention will become apparent to those skilled in the art to which this invention relates from the subsequent description of the preferred embodiments and the appended claims, taken in conjunction with the accompanying drawings.

A preferred embodiment of the invention is now described with reference to the drawing is which
Figure 1 is a cross-sectional view through a variable force solenoid valve assembly, shown in a energized position, in accordance with the preferred embodiment of the present invention;
Figure 2 is a pictorial view of an assembled variable force solenoid valve assembly showing electrical connections; and
Figure 3 is a enlarged cross-sectional view through a variable force solenoid valve assembly, shown in a de-energized position, in accordance with the preferred embodiment of the present invention.

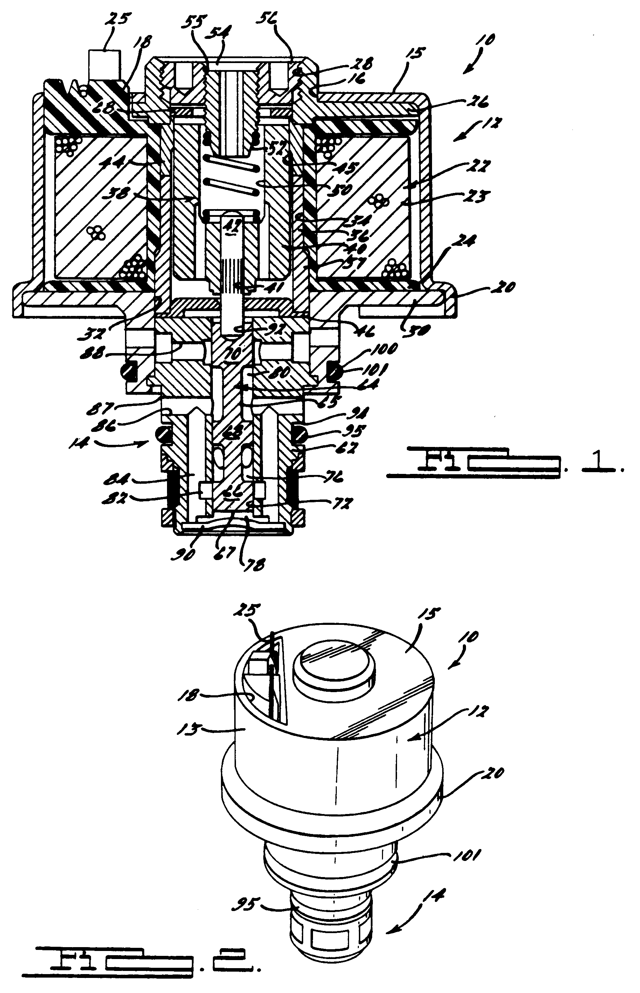

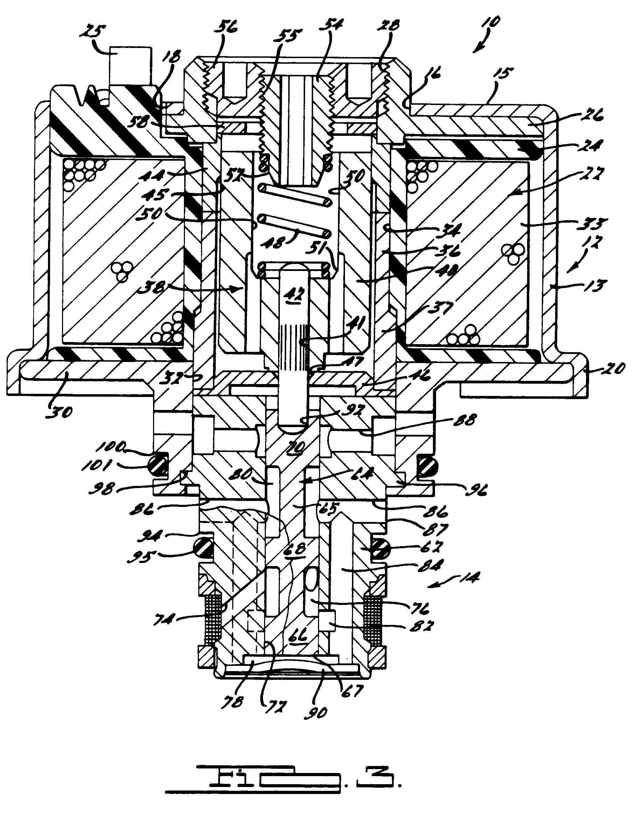

A variable force solenoid valve assembly in accordance with this invention is shown in cross-section in Figures 1 and 3 and is generally designated there by reference number 10. Variable force solenoid valve assembly 10 is designed to be installed in an automatic transmission controller assembly having a plurality of ON/OFF solenoid valve assemblies and other related components such as is disclosed in U.S. Patent No. 4,678,006 which is hereby incorporated by reference. In operation, variable force solenoid valve assembly 10 receives an electrical input signal from a remote electronic controller device which would cause the variable force solenoid valve assembly 10 to controllably regulate the fluid pressure within various flow channels of a automatic transmission. Such pressure regulation permits finely tuned calibration of the rate and impact of gear engagement which is generated by the ON/OFF solenoid valves described in detail in the above-identified reference patent.

Figures 1 ad 3 provide a detailed illustration of the internal working components of variable force solenoid valve assembly 10. The variable force solenoid valve assembly 10 has two major sub-assemblies consisting of solenoid assembly 12 and valve body assembly 14. Specifically, solenoid assembly 12 is enclosed by housing 13, having a generally closed end 15 with central bore 16 and terminal bore 18. The opposite end of housing 13 is opened and defines annular shoulder 20, such that housing 13 is slightly flared at that end. Disposed within housing 13 is a coil assembly 22 comprised of coil 23 and spool-shaped bobbin 24. Coil 23 is electrically connected to a pair of upstanding terminals 25 (one shown) which extend through terminal bore 18. A first flux collector 26 is positioned at one end of coil assembly 22 and forms a central threaded bore 28. At the opposite end of coil assembly 22, a second flux collector 30 is provided with central bore 32. Following assembly of valve body assembly 14 to solenoid assembly 12, the lower edge of housing 13 is deflected inwardly to interlock with flux collector 30. Coil assembly 22 defines a central bore 34. Tubular insert 36 is disposed within coil assembly bore 34 and has a radially outwardly extending end 37. Armature assembly 38 is positioned within coil assembly bore 34 such that it can translate therein. Armature assembly 38 comprises a two-piece structure consisting of armature body member 40 and pin member 42. Armature body member 40 has a first opened end and a second generally closed opposite end having a central bore 41. Pin member 42 has an outer diameter which provides an interference fit with the inside diameter of central bore 41. The overall length of armature assembly 38 is defined prior to assembly into solenoid assembly 12 and corresponds to specific operating positions required for variable force solenoid valve assembly 10. Pin member 42 is permanently maintained within central bore 41 via an assembly staking operation. Energization of coil 23 produces an attracting force on armature assembly 38 urging it to move in an upward direction, with reference to the orientation of the elements shown in Figure 1. This action occurs through a magnetic conduction path in which magnetic fields are transferred through flux collector 26, armature assembly 38, flux collector 30 and housing 13, thereby providing a working air-gap between the first end of armature body member 40 and flux collector 26. Armature assembly 38 is guided to remain in a desired longitudinal orientation within bore 34 of tubular insert 36 through the guiding action provided by tubular spacer 44 and guide bearing 46, which are made of non-magnetic materials which are stable over a wide temperature range. Tubular spacer 44 has a radially inwardly extending surface 45 which acts to guide the upper portion of armature body member 40 and is maintained in this position through clamping engagement between tubular insert 36 and flux collector 26. Guide bearing 46 has a central bore 47 through which pin member 42 translates. Tubular spacer 44 and guide bearing 46 provide a low friction means for supporting armature assembly 38 for axial movement without employing costly precision linear ball bearings.

Variable force solenoid valve assembly 10 includes a mechanism for providing an adjustable compliant loading onto armature assembly 38 which opposes forces imposed through energization of coil 23. This mechanism includes coil spring 48 disposed within central bore 50 provided in the first end of armature body member 40. One end of coil spring 48 rests on a lower surface 51 provided in bore 50 while the opposite end of coil spring 48 rests on spring seat 52 provided on adjustment screw 54. Adjustment screw 54, made from non-magnetic materials, includes a portion having a threaded external surface which threadingly engages a threaded central bore 55 provided in adjustment plug 56. Adjustment plug 56 is, in turn, threaded into threaded bore 28 of flux collector 26. By adjustably changing the positioning of adjustment screw 54, a variation in the biasing force exerted by coil spring 48 is provided by changing the amount of pre-compression of spring 48. Adjustment plug 56, on the other hand, is made of a magnetic material which provides means for variably adjusting the minimum working air-gap distance between armature body member 40 and flux collector 26. During operation of variable force valve assembly 10, armature stop 58 is provided to make direct contact with the first end of armature body member 40. In solenoid design, it is typically necessary to control the minimum air-gap distance since the attraction force between the surfaces of an air-gap for a given current flow increases exponentially with decreased air-gap distance. When separation distances extremely small, a change in state of the solenoid valve assembly following de-energization becomes less reliable if any residual magnetism is present when no electrical current is flowing through the coil. Direct contact or excessively small air-gap distances should be avoided since they can detrimentally effect the linearity characteristics of the solenoid valve assembly.

In accordance with another feature of this invention, the fluid control components associated with valve body assembly 14 of variable force solenoid valve assembly 10 are shown in Figures 1 and 3. Variable force solenoid valve assemblies are provided in automatic transmission controller devices to enable control over fluid pressures to be provided in response to a current input signal to coil 23. Such control is achieved by selectively reducing the pressure of fluid at inlet pressure to an outlet control pressure by restricting fluid flow and through venting fluid to a transmission sump.

In fluid control valving design, it is typically necessary to compensate for various damping forces acting upon the valving during operation which can cause vibrational instability. Such damping forces include frictional, viscous, magnetic (in solenoid applications) and hydraulic forces. It is desirable to stabilize the vibrational or oscillatory characteristics of the valving which results in decay or attenuation of the amplitude of vibration with time. Attenuation of vibration amplitude is provided, according to the preferred embodiment of this invention, through the utilization of flow control components designed to be "self-balancing" so as to readily attain equilibrium conditions during operation.

Valve body assembly 14 is primarily composed of valve body 62 and spool valve 64. Spool valve 64 has a central stem 65 and first, second and third lands, 66, 68 and 70 respectively, which radially extend from stem 65. Valve body 62 has a central bore 72 axially aligned with armature assembly 38 along a common axis. Valve body 62 further defines one or more radially extending passages 74 which communicate from the external surface of valve body 62 to a first chamber 76 which is exposed to fluid at inlet pressure. Chamber 76 is defined by the volume between first spool valve land 66 and second spool valve land 68 within valve body central bore 72. A second chamber 78 is defined by the volume within valve body central bore 72 below lower surface 67 of first spool valve land 66. A third chamber 80 is provided within valve body central bore 72 between second spool valve land 68 and third spool valve land 70. An annular orifice 82 is provided extending through valve body central bore 72 which fluidly communicates with first chamber 76. Valve body 62 further defines one or more passages 84, extending upwardly and coaxially with central bore 72, provides fluid communication between first chamber 76 at inlet pressure, orifice 82, and second chamber 78 at control pressure. One or more radially extending passages 86 provide fluid communication at control pressure between passage 84, third chamber 80 and outlet port 87. One or more radially extending exhaust passages 88 provide fluid communication between third chamber 80 and a transmission sump (not shown). Welsh plug 90 encloses the space at the lower end of valve body assembly 14.

Pin member 42 of armature assembly 38 is in pressed, fitted engagement with spool valve 64 via a bore 92 provided at the upper end of third land 70. This engagement permits spool valve 64 to move in concert with armature assembly 38. The external peripheral surface of valve body 62 includes an annular groove 94 having seal 95 disposed therein. The external surface of valve body 62 further defines a radially extending shoulder 96 which is disposed within a similarly configured groove 98 provided in flux collector 30 to provide proper orientation of the components during assembly. Flux collector 30 defines groove 100 having seal 101 disposed therein. This arrangement provides separated fluid passages wherein inlet pressure is provided via inlet passage 74 and control pressure is provided through passages 84 and 86. Fluid can be vented from the valve body assembly 14 to an external sump through exhaust passage 88.

Operation of the variable force solenoid assembly valve 10 will now be explained with reference to Figures 1 and 3. Utilization of a three land spool valve 64 interactive with fluid flow passages 74, 84, 86 and 88 and chambers 76, 78 and 80, as configured in valve body 62, generates positive hydraulic damping characteristics during fluid flow conditions. Positive damping promotes "self-balancing" characteristics which tend to attenuate unstable spool valve vibration or oscillation commonly realized in variable force solenoid valves employing spool valves having two lands. Three land spool valve 64, attenuates the amplitude of spool valve oscillation during changing flow conditions so as to provide a stable, controllable valve body assembly 14 during dynamic flow conditions and static equilibrium conditions. Specifically, fluid at inlet pressure is provided through inlet passage 74 into first chamber 76. This fluid is permitted to flow from first chamber 76 into passage 84 through annular orifice 82 which extends through central bore 72 of valve body 62. First land 66 of spool valve 64 acts to restrict the flow of fluid through orifice 82 thereby defining a first flow restriction. Fluid in passage 84 communicates with second chamber 78 and hydraulically acts upon bottom surface 67 of first spool valve land 66. Passage 84 also fluidly communicates with passage 86 and with the third chamber 80. This fluid flow causes a resultant force to act on spool valve 64, which urges it in an upward direction to a position where the force exerted by spring 48, armature assembly 38, and the fluid pressure acting on spool valve 64 within first chamber 76, second chamber 78 and third chamber 80 are balanced. The pressure acting in second chamber 78 on bottom surface 67 of first spool valve land 66 is defined to be the feedback pressure which is substantially equal to the control pressure flowing through outlet port 87. Preferably, in the absence of current flow through coil 23, such force balancing causes spool valve 64 to be displaced upwardly to increase the first fluid flow restriction between first spool valve land 66, orifice 82 and first chamber 76. This flow restriction, together with a second flow restriction which permits intentional fluid leakage between third chamber 80, third spool valve land 70 and exhaust passage 88 to a sump will provide a regulated control pressure at some predetermined level, for example, 6,4124 bar (93 psi) when the inlet pressure is about 9,6530 bar (140 psi). The resultant forces of the fluid acting on each of spool valve lads 66, 68 and 70 respectively, provide a stable, self-balanced spool valve which enables accurate regulation of the outlet control pressure. Controlled modulation over the control pressure is provided by selectively energizing coil 23. A given level of current through coil 23 will cause a magnetic force to be applied onto armature assembly 38 urging it in an upward direction, which is opposed by the force imposed by spring 48 and aided by the feedback pressure acting on the lower surface 67 of first land 66. This action has the effect of unbalancing the above described equilibrium. The resultant force causes armature assembly 38 and spool valve 64 to move in an upward direction and seek a new equilibrium condition. Such action further restricts the flow between first chamber 76, orifice 82 and passage 84, and simultaneously reduces the restriction of fluid flow between third chamber 80 and exhaust passage 88 provided by third land 70 since the extent of overlap between the bore 72 and third land 70 becomes reduced. Accordingly, controlled energization of coil 23 enables the fluid pressure of the control pressure to be variably reduced from the non-energized equilibrium control pressure in a controlled manner.

Stable control of spool valve movement upon controlled energization of coil 23 inhibits natural self-excited oscillation, thereby reducing the time for reaching new equilibrium conditions after controlled energization of the coil 23.

During initial assembly and calibration, fluid at inlet pressure is applied through inlet passages 74. A non-magnetic rod (not shown) is inserted through the threaded central bore provided in adjustment plug 56 to engage coil spring 48. Coil spring 48 is compressed with the calibration rod to obtain a desired control pressure at outlet port 87. Next, a voltage signal is applied to coil 23 to provide a predetermined current, preferably 0.8 amps, while the coil spring 48 is maintained as compressed by the calibration rod. Adjustment plug 56 is adjustably threaded inwardly until a desired control pressure is provided at outlet port 87 which occurs when a proper air-gap distance exists between flux collector 26 and the upper portion of armature assembly 38. The current is then removed from the assembly 10 and the calibration rod is removed so as to allow installation of adjustment screw 54. Adjustment screw 54 is adjustably threaded into adjustment plug 56 to re-obtain the original outlet control pressure.

Figure 1 illustrates variable force solenoid valve assembly 10 in an energized state. In this condition, fluid flow through chamber 76 into passage 84 is restricted from flowing through orifice 82 by the upper surface of first spool valve land 66 so as to controllably regulate the pressure of the fluid flowing through passage 84. Figure 3 illustrates variable force solenoid valve assembly 10 in a de-energized state. The flow restriction between first chamber 76 and passage 84 is reduced so as to permit fluid at a greater control pressure to flow through passage 84 to outlet port 87. In this condition, the flow restriction between exhaust passage 88 and third spool valve land 70, is increased so as to limit the leakage flow of fluid at control pressure through exhaust passage 88 to the sump.

## Claims

1. A variable force solenoid valve assembly for controllably reducing a fluid inlet pressure to an outlet control pressure in response to an electrical input signal, comprising:
- a solenoid assembly (12) having a movable armature assembly (38) adapted to translate within said solenoid assembly (12) in response to said electrical input signal;
- a valve body (62) defining an outlet port (87) and a central bore axially aligned within said armature assembly (38), said valve body (62) coupled to said solenoid assembly (12); and
- a spool valve (64) disposed within said valve body central bore (72) and secured to said armature assembly (12) for translational movement therewith,
characterized by:
said spool valve (64) having a central stem (65), and first and second lands (66, 68) radially extending from said stem (65) so as to define first and second chambers (76, 78) within said valve body (62), said first land (66) further defining a first flow restriction between said first chamber (76) and said outlet port (87);
- first internal passage means (74) for communicating fluid at said inlet pressure to said first chamber (76); and
- a third chamber (80) within said valve body assembly;
- a third land (70) radially extending from said stem (65) defining said third chamber (80) within said valve body central bore (72);
- second internal passage means (84) for communicating fluid at said outlet port (87) to said second chamber (78) defined within said valve body central bore (72);
- third internal passage means (86) for fluidly connecting said second internal passage means (84) to said third chamber (80) and said outlet port (87); and
- second flow restriction means associated with said third land (70) for restricting the flow of fluid at said outlet control pressure, thereby providing positive damping of said spool valve (62).

2. The variable force solenoid valve assembly of claim 1, characterized in that said solenoid assembly (12) further comprises:
an energization coil assembly (22) defining a longitudinal bore (34), said armature assembly (38) disposed in said bore (34) and adapted to translate in response to energization of said coil assembly (22);
pole means (26, 54-56) for defining a working air-gap across which magnetic fields are transferred thereby generating an attracting force between said pole means (26, 54-56) and said armature assembly (38) which urges said armature assembly (38) to move toward said pole means (26, 54-56) when said coil assembly (22) is energized; and
spring means (48) disposed between said pole means (26, 54-56) and said armature assembly (38) urging said armature assembly (38) away from said pole means (26, 54-56) when said coil assembly (22) is de-energized.

3. The variable force solenoid assembly of claim 2, characterized in that:
- said second chamber (78) within said valve body central bore (72) is defined by a surface (67) of said first land (66) opposite said central stem (65) and said valve body central bore (72);
- said first chamber (76) within said valve body central bore (72) is defined between said first and second lands (66, 68);
- said third chamber (80) within said valve body central bore (72) is defined between said second and third spool valve lands (68, 70);
- an annular orifice (82) extends through said valve body central bore (72) providing fluid communication between said first chamber (76) and said second passage means (84), said annular orifice (82) provided in close proximity to said surface of said first land (66) adjacent said central stem (65) of said spool valve (64) such that translational movement of said spool valve (64) acts to variably restrict the flow of fluid through said orifice (82) so as to define said first flow restriction;
- fourth passage means (88) are provided for communicating fluid at control pressure within said third chamber (80) to a sump, fluid flow through said fourth passage means (88) restricted by said third land (70) of said spool valve (64) such that translational movement of said spool valve (64) variably restricts fluid flow through said fourth passage means (88) so as to define said second flow restriction; and
- whereby movement of said armature assembly (38) toward said pole means (26, 54-56) upon controlled energization of said coil assembly (22) produces corresponding movement of said spool valve (64) within said valve body central bore (72) so as to decrease the flow of fluid through said first flow restriction while increasing the flow of fluid through said second flow restriction so as to decrease the regulated control pressure, and whereby, upon de-energization of said coil assembly (22), said spring means (48) urges said armature (38) and said spool valve (64) away from said pole means (26, 54-56) so as to increase the fluid flow through said first flow restriction while decreasing the fluid flow through said second flow restriction so as to increase the regulated control pressure.

4. The variable force solenoid valve assembly of claim 1 or 3, characterized in that fluid forces acting within said first chamber (76) at said inlet pressure and fluid forces acting within said second and third chambers (78, 80) at a regulated control pressure produce positive damping control of said spool valve (64) thereby decreasing the amplitude of natural oscillation of said spool valve (64) during static equilibrium conditions.

5. The variable force solenoid valve assembly of any of claims 1 through 4, characterized in that said valve body central bore (72) is axially aligned with a central longitudinal axis of said armature assembly (38) such that a surface of said spool valve third land (70) opposite said central stem (65) engages said armature assembly (38) via a pin member (42).

6. The variable force solenoid valve assembly of any of claims 1 through 5, characterized in that said armature assembly (38) comprises a tubular member (36, 44) having a first end within which said spring means (48) is disposed and a second generally closed end (37) defining a central bore (32), and a pin member (42) having a first end permanently secured within said central bore (32) of said tubular member (36, 44) and a second end disposed within a bore (92) provided on an upper surface of said spool valve third land (70).

7. The variable force solenoid valve assembly of any of claims 1 through 6, characterized by at least one electrical connector terminal (25) for providing said electrical input signal to said coil assembly (22).

8. A variable force solenoid valve assembly for use in an automatic transmission controller for controllably reducing a fluid inlet pressure to a control outlet pressure, comprising:
- an energization coil assembly (22) defining a central bore (34);
- a movable armature assembly (38) disposed in said central bore (34) and adapted to translate in said central bore (34) in response to energization of said coil assembly (22);
- a first flux collector (26) magnetically coupled to said coil assembly (22) for generating an attracting force between said first flux collector (26) and said armature assembly (38), said attracting force urging said armature assembly (38) to move toward said first flux collector (26) when said coil assembly (22) is energized;
- spring means (48) urging said armature assembly (38) away from said first flux collector (26) when said coil assembly (22) is de-energized;
- a second flux collector (30) having a central bore (32) and being disposed below, and adjacent to, said coil assembly (22);
- a housing (13) for enclosing said first flux collector (26), said coil assembly (22), and said second flux collector (30);
- a valve body (62) defining a central bore (72), said valve body (62) fixedly disposed within said central bore (32) of said second flux collector (30);
- a spool valve (64) disposed within said valve body central bore (72) having a central stem (65) and first and second lands (66, 68) radially extending from said stem (65);
- means (40-42) for coupling said spool valve (64) to said armature assembly (38) so as to permit movement of said spool valve (64) within said valve body central bore (72) in response to movement of said armature assembly (38);
- a first chamber (76) within said valve body central bore (72);
- a second chamber (78) defined by said valve body central bore (72) and a surface (67) of said first land (66) opposite said central stem (65);
- a third chamber (80) within said valve body (62);
- first passage means (74) for communicating fluid at said inlet pressure to said first chamber (76);
- second passage means (84) for communicating fluid at control pressure to said second chamber (78);
- third passage means (86) for communicating fluid at control pressure from said second passage means (84) to said third chamber (80) and said automatic transmission;
- fourth passage means (88) for communicating fluid to a sump;
- first flow restriction means for controllably restricting the flow of fluid between said first chamber (76) and an outlet port (87) in response to movement of said armature assembly (38);
characterized in that:
- said first flux collector (26) has adjustment means (54-56) for varying the minimum air-gap between said armature assembly (38) and said first flux collector (26);
- a third land (70) radially extends from said stem (65);
- said spring means (48) is disposed between said adjustment means (54-56) and said armature assembly (38);
- said first chamber (76) is defined between said first and second lands (66, 68);
- said third chamber (80) is defined between said second and third lands (68, 70);
- said first flow restriction means controllably restricts the flow of fluid between said first chamber (76) and said second passage means (84);
- second flow restriction means are provided for controllably restricting the flow of fluid between said third chamber (80) and said fourth passage means (88) in response to movement of said armature assembly (38); and
- whereby said control pressure is controllably regulated in response to a resultant force imposed on said spool valve (64) through the interaction of said spring means (48), the controlled energization and de-energization of said coil assembly (22) and said fluid pressure acting on said spool valve (64) within said first, second, and third chambers (76, 78, 80).

9. The variable force solenoid valve assembly of claim 8, characterized in that said fluid at inlet pressure acting upon said first and second lands (66, 68) within said first chamber (76), said fluid at control pressure acting upon surfaces (67) of said spool valve (64) within said second and third chambers (78, 80), said biasing force of said spring means (48) acting on said spool valve (64), and said attracting force acting on said armature assembly (38) interact so as to produce positive damping of said spool valve (64) such that natural oscillation of said spool valve (64) is inhibited.

10. The variable force solenoid valve assembly of claim 8 or 9, characterized by spring adjustment means (54-57) for varying the compliant force of said spring means (48) acting on said armature assembly (38), said spring adjustment means (54-57) being associated with said first flux collector (26).

11. The variable force solenoid valve of claim 10, characterized in that said adjustment means comprise a magnetic adjustment plug (56) threaded into a central threaded bore (55) provided in said first flux collector (26) for varying the minimum air-gap between said armature assembly (38) and said adjustment plug (56), said adjustment plug (56) having a central threaded bore (55) adapted to receive said spring adjustment means for varying the compliant force of said spring means (48), and an annular armature stop (58) disposed within said first flux collector bore (28) adjacent said armature assembly (38) for inhibiting direct engagement of said armature assembly (38) with said adjustment plug (56).

12. The variable force solenoid valve assembly of claim 11, characterized in that said spring adjustment means comprises a non-magnetic adjustment screw (54) threaded into said central threaded bore (55) of said adjustment plug (56), said screw (54) having a spring seat end (57) for engaging said spring means (48) whereby movement of said adjustment screw (54) acts to vary the compliant force of said spring means (48).

13. The variable force solenoid valve assembly of any of claims 8 through 12, characterized in that said armature assembly (38) comprises a tubular member (40) having an open end and a generally closed opposite end, and a pin member (42) having a first end permanently secured within a central bore (41) provided on said closed end of said armature assembly (38), said spring means (48) being disposed within said open end of said tubular member (40).

14. The variable force solenoid valve assembly of claim 13, characterized in that said second end of said pin member (42) extends longitudinally into said valve body central bore (72) and is fixed to said spool valve (64) at a surface of said third land (70) opposite said stem (65), said engagement of said spool valve (64) to said armature assembly (38) providing low friction means for reducing the frictional drag forces acting on said armature assembly (38) and said spool valve (64) during translational movement thereof.

15. The variable force solenoid valve assembly of any of claims 8 through 14, characterized in that said fluid pressure within said second chamber (78) is further defined as feed-back pressure, said feed-back pressure acting on said first land (66) to oppose said inlet pressure acting within said first chamber (78) so as to augment the increased flow restriction caused by said first flow restriction means upon energization of said coil assembly (22), and that said fluid pressure within said third chamber (80) acts to oppose said inlet pressure acting within said first chamber (76) so as to oppose the flow restriction caused by energization of said coil assembly (22), thereby generating positive damping control of said spool valve (64) within said valve body (62).

16. The variable force solenoid valve assembly of any of claims 8 through 15, characterized in that said first flow restriction means comprises an annular orifice (82) extending through said valve body central bore (72) so as to provide fluid communication between said first chamber (76) and said second passage means (84), such that translational movement of said spool valve (64) provides a flow restriction through said orifice (82) so as to variably regulate the flow of fluid thereby defining said control pressure.

17. The variable force solenoid valve assembly of claim 16, characterized in that said second flow restriction means is defined by the overlap of said third land (70) of said spool valve (64) between said third chamber (80) and said fourth passage means (88).

18. The variable force solenoid valve assembly of any of claims 8 through 17, characterized in that energization of said coil assembly (22) generates an attractive force such that said armature assembly (38) and said spool valve (64) move toward said first flux collector (26) so as to increase the first flow restriction between said first land (66) and said annular orifice (82) while decreasing the second flow restriction between said third chamber (80) and said fourth passage means (88) such that said outlet control pressure is proportionately decreased.

19. The variable force solenoid valve assembly of any of claims 8 through 18, characterized in that upon de-energization of said coil assembly (22) said spring means (48) urges said armature assembly (38) away from said first flux collector (26) which correspondingly moves said spool valve (64) so as to decrease the first flow restriction between said first land (66) and said orifice (82) while increasing the second flow restriction between said third chamber (80) and said fourth passage (88) so as to proportionately increase said control pressure.

20. The variable force solenoid valve assembly of any of claims 8 through 19, characterized in that said coil assembly (22), said armature assembly (38), said first flux collector (26), said spring means (48), said second flux collector (30) and said housing (13) define a solenoid assembly (12).

21. The variable force solenoid valve assembly of any of claims 8 through 20, characterized in that said valve body (62) and said spool valve (64) define a valve assembly (14) which is secured to said solenoid assembly (12).

## Patentansprüche

1. Spulengesteuerte Ventileinrichtung mit veränderlicher Kraft zur kontrollierten Reduzierung eines Flüssigkeitseingangsdrucks auf einen Ausgangskontrolldruck als Reaktion auf ein elektrisches Eingangssignal, umfassend:
- eine Spuleneinrichtung (12) mit einer beweglichen Ankereinrichtung (38), die sich innerhalb der Spuleneinrichtung (12) als Reaktion auf das elektrische Eingangssignal bewegen kann;
- ein Ventilkörper (62), der einen Auslaßanschluß (87) definiert, sowie eine zentrale axial mit der Ankereinrichtung (38) ausgerichtete Bohrung, wobei der Ventilkörper (62) mit der Spulenanordnung (12) gekoppelt ist; und
- ein Spulenventil (64), das innerhalb der zentralen Bohrung (72) des Ventilkörpers angeordnet ist und an der Ankereinrichtung (38) befestigt ist, um sich damit zu bewegen,
dadurch gekennzeichnet:
- daß das Spulenventil (64) einen zentralen Stößel (65) aufweist, sowie erste und zweite Stege (66, 68), die sich von dem Stößel (65) aus radial erstrecken, um erste und zweite Kammern (76, 78) innerhalb des Ventilkörpers (62) zu bilden, wobei der erste Steg (66) ferner eine erste Flußbegrenzung zwischen der ersten Kammer (76) und dem Auslaßanschluß (87) festlegt;
- daß erste interne Durchlaßmittel (74) vorgesehen sind, um Fluid bei Einlaßdruck mit der ersten Kammer (76) zu verbinden;
- daß eine dritte Kammer (80) innerhalb der Ventilkörpereinrichtung vorgesehen ist;
- daß sich ein dritter Steg (70) radial von dem Stößel (65) aus erstreckt, der eine dritte Kammer (80) innerhalb der zentralen Bohrung (72) des Ventilkörpers definiert;
- daß zweite interne Durchlaßmittel (84) vorgesehen sind, um Fluid vom Auslaßanschluß (87) mit der zweiten innerhalb der zentralen Bohrung (72) des Ventilkörpers definierten Kammer (78) zu verbinden;
- daß dritte interne Durchlaßmittel (86) vorgesehen sind, um die zweiten internen Durchlaßmittel (84) mit der dritten Kammer (80) und dem Auslaßanschluß (87) fluidmäßig zu verbinden; und
- daß zweite Flußbegrenzungsmittel mit dem dritten Steg (70) zusammenhängen, um den Fluß von Fluid mit Eingangskontrolldruck zu begrenzen, wodurch eine positive Dämpfung des Spulenventils (62) erreicht wird.

2. Spulengesteuerte Ventileinrichtung mit veränderlicher Kraft nach Anspruch 1, dadurch gekennzeichnet, daß die Spuleneinrichtung (12) ferner umfaßt:
eine Erregerwicklungseinrichtung (22), die eine Längsbohrung (34) festlegt, wobei die Ankereinrichtung (38) innerhalb der Bohrung (34) angeordnet ist und sich bei Aktivierung der Wicklungseinrichtung (22) darin bewegt;
Polmittel (26, 54-56) zur Festlegung eines Arbeits-Luftspaltes, über den magnetische Felder übertragen werden, wodurch eine Anziehungskraft zwischen den Polmitteln (26, 54-56) und der Ankereinrichtung (36) erzeugt wird, die die Ankereinrichtung (38) zwingt, sich auf die Polmittel (26, 54-56) zuzubewegen, wenn die Wicklungseinrichtung (22) aktiviert ist; und
Federmittel (48), die zwischen den Polmitteln (26, 54-56) und der Ankereinrichtung (38) angeordnet sind und die Ankereinrichtung (38) von den Polmitteln (26, 54-56) weg beaufschlagen, wenn die Wicklungseinrichtung (22) deaktiviert ist.

3. Spulengesteuerte Ventileinrichtung mit veränderlicher Kraft nach Anspruch 1, dadurch gekennzeichnet, daß:
- die zweite Kammer (78) innerhalb der zentralen Bohrung (72) des Ventilkörpers durch eine Fläche (67) des ersten Steges (66) definiert ist, die dem zentralen Stößel (65) und der zentralen Bohrung (72) des Ventilkörpers gegenüberliegt;
- die erste Kammer (76) innerhalb der zentralen Bohrung (72) des Ventilkörpers zwischen dem ersten und dem zweiten Steg (66, 68) definiert ist;
- die dritte Kammer (80) innerhalb der zentralen Bohrung (72) des Ventilkörpers zwischen dem zweiten und dem dritten Spulenventil-Steg (68, 70) festgelegt ist;
- sich eine ringförmige Öffnung (82) durch die zentrale Bohrung (72) des Ventilkörpers erstreckt, die eine fluidmäßige Verbindung zwischen der ersten Kammer (76) und den zweiten Durchlaßmitteln (84) schafft, wobei sich die ringförmige Öffnung (82) in enger Nachbarschaft zu der Fläche des ersten Steges (66) neben dem zentralen Stößel (65) des Spulenventils (64) derart befindet, daß eine Längsverschiebung des Spulenventils (64) eine veränderliche Begrenzung des Fluidflusses durch die Öffnung (82) erzeugt, um so die erste Flußbegrenzung zu definieren;
- vierte Durchlaßmittel (88) vorgesehen sind, um Fluid bei Kontrolldruck innerhalb der dritten Kammer (80) mit einem Sumpf zu verbinden, wobei der Fluidfluß durch die vierten Durchlaßmittel (88) durch den dritten Steg (70) des Spulenventils (64) derart begrenzt ist, daß eine Längsbewegung des Spulenventils (64) den Fluidfluß durch die vierten Durchlaßmittel (88) veränderbar begrenzt, um so die zweite Flußbegrenzung zu definieren; und
- wodurch eine Bewegung der Ankereinrichtung (38) in Richtung auf die Polmittel (26, 54-56) bei einer kontrollierten Aktivierung der Wicklungseinrichtung (22) eine entsprechende Bewegung des Spulenventils (64) innerhalb der zentralen Bohrung (72) des Ventilkörpers erzeugt, um so den Fluß von Fluid durch die erste Flußbegrenzung zu verkleinern, während der Fluß von Fluid durch die zweite Flußbegrenzung vergrößert wird, um so den geregelten Kontrolldruck zu verkleinern, und wodurch bei Deaktivierung der Wicklungseinrichtung (22) die Federmittel (48) den Anker (38) und das Spulenventil (64) von den Polmitteln (26, 54-56) weg beaufschlagen, um so den Fluß von Fluid durch die erste Flußbegrenzung zu vergrößern, während der Fluß von Fluid durch die zweite Flußbegrenzung verkleinert wird, um den geregelten Kontrolldruck zu vergrößern.

4. Spulengesteuerte Ventileinrichtung mit veränderlicher Kraft nach Anspruch 1 oder 3, dadurch gekennzeichnet, daß innerhalb der ersten Kammer (76) bei Einlaßdruck wirkende Fluidkräfte und innerhalb der zweiten und dritten Kammer (78, 80) bei geregeltem Kontrolldruck wirkende Fluidkräfte eine positive Dämpfungskontrolle des Spulenventils (64) erzeugen, wodurch die Amplitude der natürlichen Oszillation des Spulenventils (64) bei statischen Gleichgewichtsbedingungen verkleinert wird.

5. Spulengesteuerte Ventileinrichtung mit veränderlicher Kraft nach irgendeinem der Ansprüche 1 bis 4, dadurch gekennzeichnet, daß die zentrale Bohrung (72) des Ventilkörpers axial mit einer zentralen Längsachse der Ankereinrichtung (38) derart ausgerichtet ist, daß eine Fläche des dritten Steges (70) des Spulenventils gegenüber dem zentralen Steg (65) mit der Ankereinrichtung (38) über ein Stiftelement (42) verbunden ist.

6. Spulengesteuerte Ventileinrichtung mit veränderlicher Kraft nach irgendeinem der Ansprüche 1 bis 5, dadurch gekennzeichnet, daß die Ankereinrichtung (38) ein rohrförmiges Element (36, 44) mit einem ersten Ende umfaßt, innerhalb dessen die Federmittel (48) angeordnet sind, sowie ein zweites, weitgehend geschlossenes Ende (37), das eine zentrale Bohrung (32) festlegt, sowie ein Stiftelement (42), dessen erstes Ende ständig innerhalb der zentralen Bohrung (32) des rohrförmigen Elementes (36, 44) festgelegt ist, sowie ein zweites Ende, das innerhalb einer an einer oberen Fläche des dritten Steges (70) des Spulenventils vorgesehenen Bohrung (92) angeordnet ist.

7. Spulengesteuerte Ventileinrichtung mit veränderlicher Kraft nach irgendeinem der Ansprüche 1 bis 6, dadurch gekennzeichnet, daß wenigstens ein elektrischer Verbindungsanschluß (25) vorgesehen ist, um der Wicklungseinrichtung (22) das elektrische Inputsignal zuzuführen.

8. Spulengesteuerte Ventileinrichtung mit veränderlicher Kraft zur Verwendung in einer Steuerung eines automatischen Getriebes, um einen Fluid-Eingangsdruck gesteuert auf einen Kontroll-Ausgangsdruck zu reduzieren, umfassend:
- eine Erregerwicklungseinrichtung (22), die eine zentrale Bohrung (34) festlegt;
- eine bewegliche Ankereinrichtung (38), die innerhalb der zentralen Bohrung (34) angeordnet ist und sich innerhalb der zentralen Bohrung (34) bei Aktivierung der Wicklungseinrichtung (22) bewegen kann;
- ein erster Flußsammler (26), der magnetisch mit der Wicklungseinrichtung (22) gekoppelt ist, um eine Anziehungskraft zwischen dem ersten Flußsammler (26) und der Ankereinrichtung (38) zu erzeugen, wobei die Anziehungskraft die Ankereinrichtung (38) in Richtung auf den ersten Flußsammler (26) bewegt, wenn die Wicklungseinrichtung (22) aktiviert ist;
- Federmittel (48), die die Ankereinrichtung (38) von dem ersten Flußsammler (26) weg beaufschlagen, wenn die Wicklungseinrichtung (22) deaktiviert ist;
- ein zweiter Flußsammler (30), der eine zentrale Bohrung (32) aufweist und unterhalb neben der Wicklungseinrichtung (22) angeordnet ist;
- ein Gehäuse (13) zur Aufnahme des ersten Flußsammmlers (26), der Wicklungseinrichtung (22) und des zweiten Flußsammlers (30);
- ein Ventilkörper (62), der eine zentrale Bohrung (72) definiert, wobei der Ventilkörper (62) innerhalb der zentralen Bohrung (32) des zweiten Flußsammlers (30) festgelegt ist;
- ein Spulenventil (64), das innerhalb der zentralen Bohrung (72) des Ventilkörpers angeordnet ist und einen zentralen Stößel (65), sowie einen ersten und einen zweiten Steg (66, 68) aufweist, die sich radial von dem Stößel (65) aus erstrecken;
- Mittel (40-42) zum Koppeln des Spulenventils (64) mit der Ankereinrichtung (38), um eine Bewegung des Spulenventils (64) innerhalb der zentralen Bohrung (72) des Ventilkörpers als Reaktion auf eine Bewegung der Ankereinrichtung (38) zu erzeugen;
- eine erste Kammer (76) innerhalb der zentralen Bohrung (72) des Ventilkörpers;
- eine zweite Kammer (78), die durch die zentrale Bohrung (72) des Ventilkörpers und eine Fläche (67) des ersten Steges (66) gegenüber dem zentralen Stößel (65) festgelegt ist;
- eine dritte Kammer (80) innerhalb des Ventilkörpers (62);
- erste Durchlaßmittel (74), um Fluid bei Einlaßdruck zur ersten Kammer (76) zu führen;
- zweite Durchlaßmittel (84), um Fluid bei Kontrolldruck zur zweiten Kammer (78) zu führen;
- dritte Durchlaßmittel (86), um Fluid bei Kontrolldruck von den zweiten Durchlaßmitteln (84) zu der dritten Kammer (80) und zum automatischen Getriebe zu fuhren;
- vierte Durchlaßmittel (88) zur fluidmäßigen Verbindung mit einem Sumpf;
- erste Durchlaßbegrenzungsmittel, um den Fluß von Fluid zwischen der ersten Kammer (76) und einem Auslaßanschluß (87) als Antwort auf eine Bewegung der Ankereinrichtung (38) gesteuert zu begrenzen;
dadurch gekennzeichnet, daß:
- der erste Flußsammler (26) Stellmittel (54-56) zur Veränderung des minimalen Luftspaltes zwischen der Ankereinrichtung (38) und dem ersten Flußsammler (26) aufweist;
- sich ein dritter Steg (70) radial von dem Stößel (65) aus erstreckt;
- die Federmittel (48) zwischen den Stellmitteln (54-56) und der Ankereinrichtung (38) angeordnet sind;
- die erste Kammer (76) zwischen dem ersten und dem zweiten Steg (66, 68) definiert ist;
- die dritte Kammer (80) zwischen dem zweiten und dem dritten Steg (68, 70) definiert ist;
- die ersten Flußbegrenzungsmittel den Fluß von Fluid zwischen der ersten Kammer (76) und den zweiten Durchlaßmitteln (84) kontrolliert begrenzen;
- zweite Flußbegrenzungsmittel vorgesehen sind, um den Fluß von Fluid zwischen der dritten Kammer (80) und den vierten Durchlaßmitteln (88) als Reaktion auf eine Bewegung der Ankereinrichtung (38) kontrolliert zu begrenzen; und
- wodurch der Kontrolldruck kontrolliert als Reaktion auf eine resultierende Kraft geregelt wird, die auf das Spulenventil (64) durch ein Zusammenwirken der Federmittel (48), der gesteuerten Aktivierung und Deaktivierung der Wicklungseinrichtung (22) und des auf das Spulenventil (64) innerhalb der ersten, der zweiten und der dritten Kammer (76, 78, 80) wirkenden Fluiddruckes ausgeübt wird.

9. Spulengesteuerte Ventileinrichtung mit veränderlicher Kraft nach Anspruch 8, dadurch gekennzeichnet, daß das bei Einlaßdruck auf den ersten und den zweiten Steg (66, 68) innerhalb der ersten Kammer (76) wirkende Fluid, das bei Kontrolldruck auf die Flächen (67) des Spulenventils (64) innerhalb der zweiten und der dritten Kammer (78, 80) wirkende Fluid, die vorspannende Kraft der Federmittel (48), die auf das Spulenventil (64) wirken, und die anziehende Kraft, die auf die Ankereinrichtung (38) wirkt, so zusammenwirken, daß eine positive Dämpfung des Spulenventils (64) derart erzeugt wird, daß eine natürliche Oszillation des Spulenventils (64) verhindert wird.

10. Spulengesteuerte Ventileinrichtung mit veränderlicher Kraft nach Anspruch 8 oder 9, gekennzeichnet durch Federeinstellmittel (54-57), um die Vorspannkraft, der auf die Ankereinrichtung (38) wirkenden Federmittel (48) zu verändern, wobei die Federeinstellmittel (54-57) mit dem ersten Flußsammler (26) zusammenhängen.

11. Spulengesteuerte Ventileinrichtung mit veränderlicher Kraft nach Anspruch 10, dadurch gekennzeichnet, daß die Einstellmittel einen magnetischen Einstellstopfen (56) umfassen, der in eine zentrale Gewindebohrung (55) eingeschraubt ist, die in dem ersten Flußsammler (26) vorgesehen ist, um den minimalen Luftspalt zwischen der Ankereinrichtung (38) und dem Einstellstopfen (56) zu verändern, wobei der Einstellstopfen (56) eine zentrale Gewindebohrung (55) aufweist, um die Federeinstellmittel zur Veränderung der Vorspannkraft der Federmittel (48) aufzunehmen, und wobei ein ringförmiger Ankeranschlag (58) innerhalb der Bohrung (28) des ersten Flußkollektors neben der Ankereinrichtung (38) angeordnet ist, um eine direkte Verbindung der Ankereinrichtung (38) mit dem Einstellstopfen (56) zu verhindern.

12. Spulengesteuerte Ventileinrichtung mit veränderlicher Kraft nach Anspruch 11, dadurch gekennzeichnet, daß die Federeinstellmittel eine nicht-magnetische Einstellschraube (54) umfassen, die in die zentrale Gewindebohrung (55) des Einstellstopfens (56) eingeschraubt ist, wobei die Schraube (54) ein Federsitzende (57) zur Aufnahme der Federmittel (48) aufweist, wodurch eine Bewegung der Einstellschraube (54) dazu führt, daß die Vorspannkraft der Federmittel (48) verändert wird.

13. Spulengesteuerte Ventileinrichtung mit veränderlicher Kraft nach irgendeinem der Ansprüche 8 bis 12, dadurch gekennzeichnet, daß die Ankereinrichtung (38) ein rohrförmiges Element (40) umfaßt, das ein offenes Ende und weitgehend geschlossenes Ende aufweist, sowie ein Stiftelement (42), dessen erstes Ende ständig innerhalb einer zentralen Bohrung (41) festgelegt ist, die an dem geschlossenen Ende der Ankereinrichtung (38) vorgesehen ist, wobei die Federmittel (48) innerhalb des offenen Endes des rohrförmiges Elementes (40) angeordnet sind.

14. Spulengesteuerte Ventileinrichtung mit veränderlicher Kraft nach Anspruch 13, dadurch gekennzeichnet, daß sich das zweite Ende des Stiftelementes (42) längs in die zentrale Bohrung (72) des Ventilkörpers hinein erstreckt und an dem Spulenventil (64) an einer Fläche des dritten Steges (70) gegenüber dem Stößel (65) befestigt ist, wobei die Verbindung des Spulenventils (64) mit der Ankereinrichtung (38) reibungsarm ausgeführt ist, um die auf die Ankereinrichtung (38) und das Spulenventil (64) während dessen Längsbewegung wirkenden Reibkräfte zu reduzieren.

15. Spulengesteuerte Ventileinrichtung mit veränderlicher Kraft nach irgendeinem der Ansprüche 8 bis 14, dadurch gekennzeichnet, daß der Fluiddruck innerhalb der zweiten Kammer (76) ferner als ein Feedback-Druck definiert ist, wobei der Feedback-Druck auf den ersten Steg (66) wirkt, um dem innerhalb der ersten Kammer (78) wirkenden Einlaßdruck entgegenzuwirken, um so die vergrößerte Flußbegrenzung zu vergrößern, die durch die ersten Flußbegrenzungsmittel bei Aktivierung der Wicklungseinrichtung (22) verursacht wird, und wobei der Fluiddruck innerhalb der dritten Kammer (80) dem innerhalb der ersten Kammer (76) wirkenden Einlaßdruck entgegenwirkt, um so der durch Aktivierung der Wicklungseinrichtung (22) bewirkten Flußbegrenzung entgegenzuwirken, wodurch eine positive Dämpfungskontrolle des Spulenventils (64) innerhalb des Ventilkörpers (62) erzeugt wird.

16. Spulengesteuerte Ventileinrichtung mit veränderlicher Kraft nach irgendeinem der Ansprüche 8 bis 15, dadurch gekennzeichnet, daß die ersten Flußbegrenzungsmittel eine ringförmige Öffnung (82) umfassen, die sich durch die zentrale Bohrung (72) des Ventilkörpers erstreckt, um eine fluidmäßige Verbindung zwischen der ersten Kammer (76) und den zweiten Durchlaßmitteln (84) zu schaffen, derart, daß eine Längsbewegung des Spulenventils (64) eine Flußbegrenzung durch die Öffnung (82) bewirkt, um so den Fluß von Fluid dadurch variabel zu steuern, wodurch der Kontrolldruck bestimmt wird.

17. Spulengesteuerte Ventileinrichtung mit veränderlicher Kraft nach Anspruch 16, dadurch gekennzeichnet, daß die zweiten Flußbegrenzungsmittel durch die Überlappung des ersten Steges (70) des Spulenventils (64) innerhalb der dritten Kammer (80) mit den vierten Durchlaßmitteln (88) definiert ist.

18. Spulengesteuerte Ventileinrichtung mit veränderlicher Kraft nach irgendeinem der Ansprüche 8 bis 17, dadurch gekennzeichnet, daß eine Aktivierung der Wicklungseinrichtung (22) eine Anziehungskraft ausübt, derart, daß sich die Ankereinrichtung (38) und das Spulenventil (64) in Richtung auf den ersten Flußsammler (26) bewegen, um so die erste Flußbegrenzung zwischen dem ersten Steg (66) und der ringförmigen Öffnung (82) zu vergrößern, während die zweite Flußbegrenzung zwischen der dritten Kammer (80) und den vierten Durchlaßmitteln (88) verkleinert wird, derart, daß der Auslaß-Kontrolldruck proportional verkleinert wird.

19. Spulengesteuerte Ventileinrichtung mit veränderlicher Kraft nach irgendeinem der Ansprüche 8 bis 18, dadurch gekennzeichnet, daß die Federmittel (48) bei einer Deaktivierung der Wicklungseinrichtung (22) die Ankereinrichtung (38) von dem erste Flußsammler (26) weg beaufschlagen, der das Spulenventil (64) entsprechend bewegt, um so die erste Flußbegrenzung zwischen dem ersten Steg (66) und der Öffnung (82) zu verkleinern, während die zweite Flußbegrenzung zwischen der dritten Kammer (80) und dem vierten Durchlaß (88) vergrößert wird, um den Kontrolldruck so proportional zu vergrößern.

20. Spulengesteuerte Ventileinrichtung mit veränderlicher Kraft nach irgendeinem der Ansprüche 8 bis 19, dadurch gekennzeichnet, daß die Wicklungseinrichtung (22), die Ankereinrichtung (38), der erste Flußsammler (26), die Federmittel (48), der zweite Flußsammler (30) und das Gehäuse (13) eine Spuleneinrichtung (12) definieren.

21. Spulengesteuerte Ventileinrichtung mit veränderlicher Kraft nach irgendeinem der Ansprüche 8 bis 20, dadurch gekennzeichnet, daß der Ventilkörper (62) und das Spulenventil (64) eine Ventileinrichtung (14) bilden, die an der Spuleneinrichtung (12) befestigt ist.

## Revendications

1. Ensemble formant électrovanne, ayant un solénoïde à force variable, pour réduire de manière contrôlable une pression d'entrée d'un fluide jusqu'à une pression de commande de sortie, en réponse à un signal d'entrée électrique, comprenant:
- un ensemble (12) formant solénoïde comportant un ensemble formant armature mobile (38) adapté pour se déplacer en translation à l'intérieur dudit ensemble formant solénoïde, en réponse audit signal d'entrée électrique;
- un corps de vanne (62) définissant un orifice de sortie (87) et un alésage central aligné axialement avec ledit ensemble formant armature (38), ledit corps de vanne (62) étant couplé audit ensemble formant solénoïde (12); et
- un distributeur à tiroir (64) disposé à l'intérieur dudit alésage central (72) du corps de vanne et fixé audit ensemble formant armature (12) en vue d'un mouvement de translation avec ce dernier, caractérisé par ledit distributeur à tiroir (64) comportant une tige centrale (65), et des premier et deuxième éléments d'espacements (66, 68) s'étendant dans le sens radial à partir de ladite tige (65) de manière à définir une première et une deuxième chambres (76, 78) à l'intérieur dudit corps de vanne (62), ledit premier élément d'espacement (66) définissant, en outre, une première limitation de débit entre ladite première chambre (76) et ledit orifice de sortie (87);
- un premier moyen formant passage interne (74) pour assurer la communication du fluide à ladite pression d'entrée vers ladite première chambre (76); et
- une troisième chambre (80) à l'intérieur dudit ensemble formant corps de vanne;
- un troisième élément d'espacement (70) s'étendant dans le sens radial à partir de ladite tige (65) définissant ladite troisième chambre (80) à l'intérieur dudit alésage central du corps de vanne (72);
- un deuxième moyen formant passage interne (84) pour assurer la communication du fluide au niveau dudit orifice de sortie (87) vers ladite deuxième chambre (78) définie à l'intérieur dudit alésage central (72) du corps de vanne;
- un troisième moyen formant passage interne (86) pour raccorder, en ce qui concerne l'écoulement du fluide, ledit deuxième moyen formant passage interne (84) à ladite troisième chambre (80) et audit orifice de sortie (87); et
- un deuxième moyen de limitation de débit associé audit troisième élément d'espacement (70) pour limiter le débit du fluide à ladite pression de commande de sortie, assurant ainsi un amortissement positif dudit distributeur à tiroir (62).

2. Ensemble formant électovanne, ayant un solénoïde à force variable selon la revendication 1, caractérisé en ce que ledit ensemble formant solénoïde (12) comprend, en outre:
un ensemble formant bobine d'excitation (22) définissant un alésage longitudinal (34), ledit ensemble formant armature (38) étant disposé dans ledit alésage (34) et adapté pour se déplacer en translation en réponse à l'excitation dudit ensemble formant bobine (22);
des moyens formant pôles (26, 54 - 56) pour définir un interstice de travail rempli d'air, à travers lequel des champs magnétiques sont transférés, générant ainsi une force d'attraction entre lesdits moyens formant pôles (26, 54-56) et ledit ensemble formant armature (38) qui pousse ledit ensemble formant armature (38) pour se déplacer vers lesdits moyens formant pôles (26, 54-56) lorsque ledit ensemble formant bobine (22) est excité; et
des moyens formant ressorts (48) disposés entre lesdits moyens formant pôles (26, 54-56) et ledit ensemble formant armature (38), écartant ledit ensemble formant armature (38) desdits moyens formant pôles (26, 54-56) lorsque ledit ensemble formant bobine (22) est désexcité.

3. Ensemble formant électrovanne, ayant un solénoïde à force variable selon la revendication 2, caractérisé en ce que:
- ladite deuxième chambre (78) à l'intérieur dudit alésage central (72) du corps de vanne est définie par une surface (67) dudit premier élément d'espacement (66) opposée à ladite tige centrale (65) et audit alésage central (72) du corps de vanne;
- ladite première chambre (76) à l'intérieur dudit alésage central (72) du corps de vanne est définie entre lesdits premier et deuxième éléments d'espacement (66, 68);
- ladite troisième chambre (80) à l'intérieur dudit alésage central (72) du corps de vanne est définie entre lesdits deuxième et troisième éléments d'espacement (68, 70) du distributeur à tiroir;
- un orifice annulaire (82) s'étend à travers ledit alésage central (72) du corps de vanne assurant la communication du fluide entre ladite première chambre (76) et ledit deuxième moyen formant passage (84), ledit orifice annulaire (82) étant prévu à proximité de ladite surface dudit premier élément d'espacement (66) adjacent à ladite tige centrale (65) dudit distributeur à tiroir (64), de telle sorte qu'un mouvement en translation dudit distributeur à tiroir (64) agit pour limiter, de manière variable, l'écoulement du fluide à travers ledit orifice (82) de manière à définir la première limitation de débit;
- un quatrième moyen formant passage (88) est prévu pour assurer la communication du fluide à une pression de commande à l'intérieur de ladite troisième chambre (80) vers une cuve, l'écoulement du fluide à travers ledit quatrième moyen formant passage (88) étant limité par ledit troisième élément d'espacement (70) dudit distributeur à tiroir (64), de telle sorte que le mouvement en translation dudit distributeur à tiroir (64) limite, de manière variable, l'écoulement du fluide à travers ledit quatrième moyen formant passage (88) de manière à définir ladite deuxième limitation de débit; et le mouvement dudit ensemble formant armature (38) vers ledit moyen formant pôles (26, 54-56) lors de l'excitation contrôlée dudit ensemble formant bobine (22) produit un mouvement correspondant dudit distributeur à tiroir cylindrique (64) à l'intérieur dudit alésage central (72) du corps de vanne afin de réduire l'écoulement de fluide à travers ladite première limitation de débit, tout en augmentant l'écoulement de fluide à travers ladite deuxième limitation de débit afin de réduire la pression de commande régulée, et ainsi, lors de la désexcitation dudit ensemble formant bobine (22), ledit moyen formant ressort (48) écarte ladite armature (38) et ledit distributeur à tiroir (64) dudit moyen formant pôles (26, 54- 56) afin d'augmenter l'écoulement du fluide à travers ladite première limitation de débit tout en réduisant l'écoulement du fluide à travers ladite deuxième limitation de débit afin d'augmenter la pression de commande régulée.

4. Ensemble formant électrovanne, ayant un solénoïde à force variable selon la revendication 1 ou 3, caractérisé en ce que les forces du fluide agissant à l'intérieur de ladite première chambre (76) à ladite pression d'entrée et les forces du fluide agissant à l'intérieur desdites deuxième et troisième chambres (78, 80) à une pression de commande régulée produisent un contrôle d'amortissement positif dudit distributeur à tiroir (64), réduisant ainsi l'amplitude d'oscillation naturelle dudit distributeur à tiroir (64) dans des conditions d'équilibre statique.

5. Ensemble formant électrovanne, ayant un solénoïde à force variable selon l'une quelconque des revendications 1 à 4, caractérisé en ce que ledit alésage central (72) du corps de vanne est aligné axialement avec un axe longitudinal central dudit ensemble formant armature (38), de telle sorte qu'une surface du troisième élément d'espacement (70) du distributeur à tiroir opposée à ladite tige centrale (65), est engagée avec ledit ensemble formant armature (38) via un organe formant broche (42).

6. Ensemble formant électrovanne, ayant un solénoïde à force variable, selon l'une quelconque des revendications 1 à 5, caractérisé en ce que ledit ensemble formant armature (38) comprend un organe tubulaire (36, 44) ayant une première extrémité à l'intérieur de laquelle ledit moyen formant ressort (48) est disposé et une deuxième extrémité généralement fermée (37) définissant un alésage central (32) et un organe formant broche (42) ayant une première extrémité fixée de manière permanente à l'intérieur dudit alésage central (32) dudit organe tubulaire (36, 44) et une deuxième extrémité disposée à l'intérieur d'un alésage (92) ménagé sur une surface supérieure dudit troisième élément d'espacement (70) du distributeur à tiroir.

7. Ensemble formant électrovanne, ayant à force variable selon l'une quelconque des revendications 1 à 6, caractérisé par au moins une borne de connexion électrique (25) pour fournir ledit signal d'entrée électrique audit ensemble formant bobine (22).

8. Ensemble formant électrovanne, ayant un solénoïde à force variable, agencé pour être utilisé dans un organe de contrôle de transmission automatique pour réduire de manière contrôlable une pression d'entrée d'un fluide jusqu'à une pression de sortie de commande, comprenant:
- un ensemble formant bobine d'excitation (22) définissant un alésage central (34);
- un ensemble formant armature mobile (38) disposé dans ledit alésage central (34) et adapté pour se déplacer en translation dans ledit alésage central (34) en réponse à l'excitation dudit ensemble formant bobine (22);
- un premier collecteur de flux (26) couplé magnétiquement audit ensemble formant bobine (22) pour générer une force d'attraction entre ledit premier collecteur de flux (26) et ledit ensemble formant armature (38), ladite force d'attraction poussant ledit ensemble formant armature (38) pour se déplacer vers ledit premier collecteur de flux (26) lorsque ledit ensemble formant bobine (22) est excité;
- un moyen formant ressort (48) écartant ledit ensemble formant armature (38) dudit premier collecteur de flux (26) lorsque ledit ensemble formant bobine (22) est désexcité;
- un deuxième collecteur de flux (30) comportant un alésage central (32) et étant placé en dessous dudit ensemble formant bobine (22) et de manière adjacente par rapport à ce dernier;
- un carter (13) pour recevoir ledit premier collecteur de flux (26), ledit ensemble formant bobine (22) et ledit deuxième collecteur de flux (30);
- un corps de vanne (62) définissant un alésage central (72), ledit corps de vanne (62) étant disposé, de manière fixe, à l'intérieur dudit alésage central (32) dudit deuxième collecteur de flux (30);
- un distributeur à tiroir (64) disposé à l'intérieur dudit alésage central (72) du corps de vanne comportant une tige centrale (65) et des premier et deuxième éléments d'espacements (66, 68) s'étendant dans le sens radial à partir de ladite tige (65);
- des moyens (40, 42) pour coupler ledit distributeur à tiroir (64) audit ensemble formant armature (38), afin de permettre le mouvement dudit distributeur à tiroir (64) à l'intérieur dudit alésage central (72) du corps de vanne en réponse au mouvement dudit ensemble formant armature (38);
- une première chambre (76) à l'intérieur dudit alésage central (72) du corps de vanne;
- une deuxième chambre (78) définie par ledit alésage central (72) du corps de vanne et une surface (67) dudit premier élément d'espacement (66) opposée à ladite tige centrale (65);
- une troisième chambre (80) à l'intérieur dudit corps de vanne (62);
- un premier moyen formant passage (74) pour assurer la communication du fluide à ladite pression d'entrée vers ladite première chambre (76);
- un deuxième moyen formant passage (84) pour assurer la communication du fluide à ladite pression de commande vers ladite deuxième chambre (78);
- un troisième moyen formant passage (86) pour assurer la communication du fluide à la pression de commande à partir dudit deuxième moyen formant passage (84) vers ladite troisième chambre (80) et ladite transmission automatique;
- un quatrième moyen formant passage (88) pour assurer la communication du fluide vers un cuve;
- un premier moyen de limitation du débit pour limiter de manière contrôlable l'écoulement du fluide entre ladite première chambre (76) et un orifice de sortie (87) en réponse au mouvement dudit ensemble formant armature (38);
caractérisé en ce que:
- ledit premier collecteur de flux (26) comporte un moyen de réglage (54 - 56) pour faire varier l'interstice minimal rempli d'air entre ledit ensemble formant armature (38) et ledit premier collecteur de flux (26);
- un troisième élément d'espacement (70) s'étend dans le sens radial à partir de ladite tige (65);
- ledit moyen formant ressort (48) est disposé entre ledit moyen de réglage (54 - 56) et ledit ensemble formant armature (38);
- ladite première chambre (76) est définie entre lesdits premier et deuxième éléments d'espacements (66, 68);
- ladite troisième chambre (80) est définie entre lesdits deuxième et troisième éléments d'espacements (68, 70);
- ledit premier moyen de limitation du débit limite de manière contrôlable l'écoulement de fluide entre ladite première chambre (76) et ledit deuxième moyen formant passage (84);
- un deuxième moyen de limitation du débit est disposé pour limiter de manière contrôlable l'écoulement du fluide entre ladite troisième chambre (80) et ledit quatrième moyen formant passage (88) en réponse au mouvement dudit ensemble formant armature (38); et
- ladite pression de commande est ainsi régulée de manière contrôlable en réponse à une force résultante appliquée sur ledit distributeur à tiroir (64) par l'interaction dudit moyen formant ressort (48), l'excitation et la désexcitation contrôlées dudit ensemble formant bobine (22) et ladite pression de fluide agissant sur ledit distributeur à tiroir (64) à l'intérieur desdites première, deuxième et troisième chambres (76, 78, 80).

9. Ensemble formant électrovanne, ayant un solénoïde à force variable selon la revendication 8, caractérisé en ce que ledit fluide à la pression d'entrée agissant sur lesdits premier et deuxième éléments d'espacement (66, 68) à l'intérieur de ladite première chambre (76), ledit fluide à la pression de commande agissant sur les surfaces (67) dudit distributeur à tiroir (64) à l'intérieur desdites deuxième et troisième chambres (78, 80), ladite force de rappel dudit moyen formant ressort (48) agissant sur ledit distributeur à tiroir (64), et ladite force d'attraction agissant sur ledit ensemble formant armature (38) interagissent afin de produire un amortissement positif dudit distributeur à tiroir (64), de telle sorte que l'oscillation naturelle dudit distributeur à tiroir (64) est inhibée.

10. Ensemble formant électrovanne, ayant un solénoïde à force variable selon la revendication 8 ou 9, caractérisé par un moyen de réglage à ressort (54 - 57) pour faire varier la force élastique dudit moyen formant ressort (48) agissant sur ledit ensemble formant armature (38), ledit moyen de réglage (54 - 57) étant associé audit premier collecteur de flux (26).

11. Electrovanne, ayant un solénoïde à force variable selon la revendication 10, caractérisée en ce que ledit moyen de réglage comprend un bouchon de réglage magnétique (56) vissé dans un alésage central fileté (55) prévu dans ledit premier collecteur de flux (26) pour faire varier l'interstice d'air minimal entre ledit ensemble formant armature (38) et ledit bouchon de réglage (56), ledit bouchon de réglage (56) comportant un alésage central fileté (55) adapté pour recevoir ledit moyen de réglage du ressort pour faire varier la force élastique dudit moyen formant ressort (48), et un dispositif d'arrêt annulaire d'armature (58) disposé à l'intérieur dudit premier alésage de collecteur de flux (28) adjacent audit ensemble formant armature (38) pour inhiber l'engagement dudit ensemble formant armature (38) avec ledit bouchon de réglage (56).

12. Ensemble formant électrovanne, ayant un solénoïde à force variable selon la revendication 11, caractérisé en ce que ledit moyen de réglage du ressort comprend une vis de réglage non magnétique (54) vissée dans ledit alésage central fileté (55) dudit bouchon de réglage (56), ladite vis (54) présentant une extrémité formant siège de ressort (57) pour son engagement avec ledit moyen formant ressort (48, le mouvement de ladite vis de réglage (54) agissant pour faire varier la force élastique dudit moyen formant ressort (48).

13. Ensemble formant électrovanne, ayant un solénoïde à force variable selon l'une quelconque des revendications 8 à 12, caractérisé en ce que ledit ensemble formant armature (38) comprend un organe tubulaire (40) comportant une extrémité ouverte et une extrémité opposée généralement fermée, et un organe formant broche (42) comportant une première extrémité fixée de manière permanente à l'intérieur d'un alésage central (41) prévu sur ladite extrémité fermée dudit ensemble formant armature (38), ledit moyen formant ressort (48) étant disposé à l'intérieur de ladite extrémité ouverte dudit organe tubulaire (40).

14. Ensemble formant électrovanne, ayant un solénoïde à force variable selon la revendication 13, caractérisé en ce que ladite deuxième extrémité dudit organe formant broche (42) s'étend longitudinalement dans ledit alésage central (72) du corps de vanne et est fixé audit distributeur à tiroir (64) au niveau d'une surface dudit troisième élément d'espacement (70) opposée à ladite tige (65), ledit engagement dudit distributeur à tiroir (64) avec ledit ensemble formant armature (38) fournissant des moyens de faible frottement pour réduire les forces de résistance de friction agissant sur ledit ensemble formant armature (38) et ledit distributeur à tiroir (64) pendant le mouvement en translation de ce dernier.

15. Ensemble formant électrovanne, ayant un solénoïde à force variable selon l'une quelconque des revendications 8 à 14, caractérisé en ce que ladite pression de fluide à l'intérieur de ladite deuxième chambre (78) est, en outre, définie comme pression de rétroaction, ladite pression de rétroaction agissant sur ledit premier élément d'espacement (66) pour s'opposer à ladite pression d'entrée agissant à l'intérieur de ladite première chambre (78) afin d'augmenter la limitation de débit accrûe provoquée par ledit premier moyen de limitation de débit lors de l'excitation dudit ensemble formant bobine (22), et en ce que ladite pression de fluide à l'intérieur de ladite troisième chambre (76) agit pour s'opposer à ladite pression d'entrée agissant à l'intérieur de ladite première chambre (76) afin de s'opposer à la limitation de débit provoquée par l'excitation dudit ensemble formant bobine (22), générant ainsi un contrôle d'amortissement positif dudit distributeur à tiroir (64) à l'intérieur dudit corps de vanne (62).

16. Ensemble formant électrovanne, ayant un solénoïde à force variable, selon l'une quelconque des revendications 8 à 15, caractérisé en ce que ledit premier moyen de limitation de débit comprend un orifice annulaire (82) s'étendant à travers ledit alésage central (72) du corps de vanne, afin d'assurer la communication du fluide entre ladite première chambre (76) et ledit deuxième moyen formant passage (84), de telle sorte que le mouvement en translation dudit distributeur à tiroir (64) assure une limitation de débit à travers ledit orifice (82) afin de réguler, de manière variable, l'écoulement du fluide , définissant ainsi ladite pression de commande.

17. Ensemble formant électrovanne, ayant un solénoïde à force variable selon la revendication 16, caractérisé en ce que ledit deuxième moyen de limitation de débit est défini par le chevauchement dudit troisième élément d'espacement (70) dudit distributeur à tiroir (64) entre ladite troisième chambre (80) et ledit quatrième moyen formant passage (88).

18. Ensemble formant électrovanne, ayant un solénoïde à force variable selon l'une quelconque des revendications 8 à 17, caractérisé en ce que l'excitation dudit ensemble formant bobine (22) génère une force d'attraction telle que ledit ensemble formant armature (38) et ledit distributeur à tiroir (64) se déplacent en direction dudit premier collecteur de flux (26) afin d'augmenter la première limitation de débit entre ledit premier élément d'espacement (66) et ledit orifice annulaire (82), tout en diminuant la deuxième limitation de débit entre ladite troisième chambre (80) et ledit quatrième moyen formant passage (88) de telle sorte que la pression de commande de sortie est diminuée proportionnellement.

19. Ensemble formant électrovanne, ayant un solénoïde à force variable selon l'une quelconque des revendications 8 à 18, caractérisé en ce que lors de la désexcitation dudit ensemble formant bobine (22) ledit moyen formant ressort (48) écarte ledit ensemble formant armature (38) dudit premier collecteur de flux (26) qui déplace de manière correspondante ledit distributeur à tiroir (64) de manière à diminuer la première limitation de débit entre ledit premier élément d'espacement (66) et ledit orifice (82) tout en augmentant la deuxième limitation de débit entre ladite troisième chambre (80) et ledit quatrième passage (88) de manière à augmenter proportionnellement ladite pression de commande.

20. Ensemble formant électrovanne, ayant un solénoïde à force variable selon l'une quelconque des revendications 8 à 19, caractérisé en ce que ledit ensemble formant bobine (22), ledit ensemble formant armature (38), ledit premier collecteur de flux (26), ledit moyen formant ressort (48), ledit deuxième collecteur de flux (30) et ledit carter (13) définissent un ensemble formant solénoïde (12).

21. Ensemble formant électrovanne, ayant un solénoïde à force variable selon l'une quelconque des revendications 8 à 20, caractérisé en ce que ledit corps de distributeur (62) et ledit distributeur (64) définissent un ensemble formant vanne (14), qui est fixé audit ensemble formant solénoïde (12).
